(19)

Europäisches Patentamt

European Patent Office

Office européen des brevets

(11)  **EP 4 535 252 A1**

(12)  **EUROPEAN PATENT APPLICATION**

(43) Date of publication:
  **09.04.2025  Bulletin 2025/15**

(21) Application number: **24202116.0**

(22) Date of filing: **24.09.2024**

(51) International Patent Classification (IPC):
  **G06Q 10/063** (2023.01)     **G06Q 10/0637** (2023.01)
  **G06Q 10/0639** (2023.01)     **G06Q 10/067** (2023.01)

(52) Cooperative Patent Classification (CPC):
  **G06Q 10/063; G06Q 10/06375; G06Q 10/06393;
  G06Q 10/067**

(84) Designated Contracting States:
  **AL AT BE BG CH CY CZ DE DK EE ES FI FR GB
  GR HR HU IE IS IT LI LT LU LV MC ME MK MT NL
  NO PL PT RO RS SE SI SK SM TR**
  Designated Extension States:
  **BA**
  Designated Validation States:
  **GE KH MA MD TN**

(30) Priority: **05.10.2023  IN 202321066893**

(71) Applicant: **Tata Consultancy Services Limited
  Maharashtra (IN)**

(72) Inventors:
  • **PAI, ASHOK GANESH
    400079 Mumbai (IN)**
  • **DAS SARMA, ASOKE
    700156 Kolkata (IN)**
  • **DESAI, MINESH DINESHCHANDRA
    560066 Bengaluru (IN)**
  • **PANDEY, ARUNIMA
    411006 Pune (IN)**

(74) Representative: **Goddar, Heinz J.
  Boehmert & Boehmert
  Anwaltspartnerschaft mbB
  Pettenkoferstrasse 22
  80336 München (DE)**

(54)  **METHODS AND SYSTEMS FOR OPTIMIZING PERFORMANCE OF ENTERPRISE OPERATIONS USING MATURITY ASSESMENT**

(57)    The disclosure relates generally to methods and systems for optimizing performance of enterprise operations using maturity assessment. Existing enterprise operations maturity assessment frameworks are inefficient and lack comprehensive and integrated coverage of all three layers of the enterprise operations. The present disclosure computes or assesses a maturity score of the enterprise operation on a predefined maturity scale. The maturity score of the enterprise operation is determined based on responses to a set of evaluators which are described as the key performance indicators for a given enterprise operation. The enterprise operation maturity assessment outcomes comprise of current overall enterprise operation maturity score, benchmarks for key performance indicators, and a subset of recommended solutions to achieve improved maturity levels. Further, the methods and systems of the present disclosure allow to simulate the improvement in individual metric performance values based the recommended solutions selected for each of the key performance indicators.

FIG. 2

**Description**

CROSS-REFERENCE TO RELATED APPLICATIONS AND PRIORITY

The present application claims priority to Indian application no. 202321066893, filed on October 5, 2023.

TECHNICAL FIELD

The disclosure herein generally relates to the field of maturity assessment of enterprise operations, and more specifically to methods and systems for optimizing performance of enterprise operations using maturity assessment.

BACKGROUND

An enterprise operation is a collection of business tasks and activities that when performed by people or systems in a structured course, produces an outcome that contributes to respective defined business goals. The enterprise operations include but are not limited to information technology (IT) infrastructure operations, IT applications, and a business process in the organization. Continuous and repeated execution of the enterprise operations is essential for successful business operations and the business growth. The enterprise operations vary depending upon the type, industry, geography, and so on., of the business.

An enterprise operations maturity assessment helps business leaders to assess an operational maturity of an organization and to guide decision makers for a potential improvement of the organization. The enterprise operations typically consist of three layers namely, (i) a foundation layer such as IT Infrastructure operation, e.g., Data Centre, Network, Workspace, etc. at bottom, (ii) an IT Applications layer e.g., SAP Operations in the middle, and (iii) a business process layer e.g., Finance and Accounting at the top. These three layers typically function in silos and thus it is often a challenge for the organization to assess the maturity of the enterprise operations in an integrated and comprehensive manner.

There are limited enterprise operations maturity assessment frameworks in the art that assess the maturity of the organization and the enterprise operations. However, the existing enterprise operations maturity assessment frameworks are inefficient and lack comprehensive and integrated coverage of all three layers of the enterprise operations, as they are complex and time-consuming, as the maturity assessment process involve data collection and analysis through multiple templates and data sources. Further, below are some of the technical challenges with the existing enterprise operations maturity assessment frameworks:

- Not adequately adept at addressing the Business 4.0 landscape and lack the ability to measure the cognitive maturity of business operations. Majorly focused on first-generation dimensions such as technology, process, people, and controls.
- Have basic output reports comprising of overall process health and recommendation set for process improvement, and do not offer enhanced functionalities.
- Offer limited functionality scope with static logic-based output reports and do not allow for simulating what if scenarios and measuring the impact of solutions on overall maturity and potential improvement in metric performance.
- Provide a standard assessment approach with a static questionnaire.
- Do not provide target state based contextualized transformation solutions to improve metric performance and overall process maturity.
- Provide limited coverage in terms of the business functions, industries, technology operations and enterprise resource planning (ERP) Operations (for example, SAP, Oracle). They are typically restricted to some common business operations like finance and supply chain.
- Do not offer single consolidated repository of contextualized transformation solutions aligned to technology towers across maturity levels, metrics and benchmarks for multiple industries, business functions, technology operations and the ERP Operations (for example, SAP, Oracle).
- Do not address the full stakeholder play & measure their respective key performance indicators (KPIs).
- Do not provide solutions aligned to delivery or emerging delivery technology levers and are not contextualized to user's preference.
- Do not allow to simulate the monetary benefits from implementation of the given solutions such as cost savings, working capital optimization etc.
- Have limited output dashboards with first generation functionalities and features.

SUMMARY

Embodiments of the present disclosure present technological improvements as solutions to one or more of the above-mentioned technical problems recognized by the inventors in conventional systems.

In an aspect, a processor-implemented method for optimizing performance of enterprise operations using maturity assessment is provided. The method including the steps of: selecting, (i) an industry type from a list of industry types, (ii) an enterprise operation of one or more enterprise operations associated with each industry type, and (iii) an enterprise persona of one or more enterprise personas associated with each enterprise operation of the one or more enterprise operations, whose maturity is to be assessed and a performance is to be optimized, wherein the one or more enterprise operations comprises one or more defined business operations and one or more defined information technology (IT) operations; populating dynamically one after other, one or more performance evaluators, based on an industry type, the enterprise operation and the enterprise persona selected, whose maturity is to be assessed and the performance is to be optimized; providing, an individual performance value for each performance evaluator of the one or more performance evaluators, wherein the individual performance value for each performance evaluator is an actual performance level and provided from a predefined performance range defined for each performance evaluator; computing, an individual maturity score for each performance evaluator of the one or more performance evaluators, based on (i) the individual performance value for an associated performance evaluator, (ii) a plurality of maturity levels defined for the associated performance evaluator, and (iii) one or more maturity ratings defined for the associated performance evaluator; calculating, an enterprise operation maturity score for each enterprise operation selected, based on the individual maturity score for each performance evaluator of the one or more performance evaluators; dynamically providing, one or more recommended solutions for each performance evaluator, based on the individual maturity score for the associated performance evaluator, to improve the maturity score for each enterprise operation selected, wherein the one or more recommended solutions for each performance evaluator are defined for either an incremental improvement or a best-in-class level improvement in the individual maturity score of each enterprise operation selected; receiving, a target enterprise operation maturity score to achieve for each enterprise operation; dynamically providing, the one or more recommended solutions for each performance evaluator, based on a current enterprise operation maturity score and the target enterprise operation maturity score, to allow for optimizing performance of each enterprise operation; and determining, one or more potential benefits for each of the one or more recommended solutions provided for each performance evaluator, using a benefit computation algorithm.

In another aspect, a system for optimizing performance of enterprise operations using maturity assessment is provided. The system includes: a memory storing instructions; one or more Input/Output (I/O) interfaces; and one or more hardware processors coupled to the memory via the one or more I/O interfaces, wherein the one or more hardware processors are configured by the instructions to: select, (i) an industry type from a list of industry types, (ii) an enterprise operation of one or more enterprise operations associated with each industry type, and (iii) an enterprise persona of one or more enterprise personas associated with each enterprise operation of the one or more enterprise operations, whose maturity is to be assessed and a performance is to be optimized, wherein the one or more enterprise operations comprises one or more defined business operations and one or more defined information technology (IT) operations; populate dynamically one after other, one or more performance evaluators, based on an industry type, the enterprise operation and the enterprise persona selected, whose maturity is to be assessed and the performance is to be optimized; provide, an individual performance value for each performance evaluator of the one or more performance evaluators, wherein the individual performance value for each performance evaluator is an actual performance level and provided from a predefined performance range defined for each performance evaluator; compute, an individual maturity score for each performance evaluator of the one or more performance evaluators, based on (i) the individual performance value for an associated performance evaluator, (ii) a plurality of maturity levels defined for the associated performance evaluator, and (iii) one or more maturity ratings defined for the associated performance evaluator; calculate, an enterprise operation maturity score for each enterprise operation selected, based on the individual maturity score for each performance evaluator of the one or more performance evaluators; dynamically provide, one or more recommended solutions for each performance evaluator, based on the individual maturity score for the associated performance evaluator, to improve the maturity score for each enterprise operation selected, wherein the one or more recommended solutions for each performance evaluator are defined for either an incremental improvement or a best-in-class level improvement in the individual maturity score of each enterprise operation selected; receive, a target enterprise operation maturity score to achieve for each enterprise operation; dynamically provide, the one or more recommended solutions for each performance evaluator, based on a current enterprise operation maturity score and the target enterprise operation maturity score, to allow for optimizing performance of each enterprise operation; and determine, one or more potential benefits for each of the one or more recommended solutions provided for each performance evaluator, using a benefit computation algorithm.

In yet another aspect, there is provided One or more non-transitory machine-readable information storage mediums comprising one or more instructions which when executed by one or more hardware processors cause: selecting (i) an industry type from a list of industry types, (ii) an enterprise operation of one or more enterprise operations associated with each industry type, and (iii) an enterprise persona of one or more enterprise personas associated with each enterprise operation of the one or more enterprise operations, whose maturity is to be assessed and a performance is to be optimized, wherein the one or more enterprise operations comprises one or more defined business operations and one or more defined information technology (IT) operations; populating dynamically one after other one or more performance evaluators, based on an industry type, the enterprise operation and the enterprise persona selected, whose maturity is to be assessed and the performance is to be optimized; providing an individual performance value for each performance evaluator of the one or more performance evaluators, wherein the individual performance value for each performance evaluator is an actual performance level and provided from a predefined performance range defined for each performance evaluator; computing an individual maturity score for each performance evaluator of the one or more performance evaluators, based on (i) the individual performance value for an associated performance evaluator, (ii) a plurality of maturity levels defined for the associated performance evaluator, and (iii) one or more maturity ratings defined for the associated performance evaluator; calculating an enterprise operation maturity score for each enterprise operation selected, based on the individual maturity score for each performance evaluator of the one or more performance evaluators; dynamically providing one or more recommended solutions for each performance evaluator, based on the individual maturity score for the associated performance evaluator, to improve the maturity score for each enterprise operation selected, wherein the one or more recommended solutions for each performance evaluator are defined for either an incremental improvement or a best-in-class level improvement in the individual maturity score of each enterprise operation selected; receiving a target enterprise operation maturity score to achieve for each enterprise operation; dynamically providing the one or more recommended solutions for each performance evaluator, based on a current enterprise operation maturity score and the target enterprise operation maturity score, to allow for optimizing performance of each enterprise operation; and determining one or more potential benefits for each of the one or more recommended solutions provided for each performance evaluator, using a benefit computation algorithm.

In an embodiment, simulating the one or more recommended solutions provided for each performance evaluator, to validate the one or more recommended solutions provided for each performance evaluator, comprises: choosing one or more relevant recommended solutions for each performance evaluator out of the one or more recommended solutions provided for the associated performance evaluator based on a relevance; computing, an individual simulated maturity score for each performance evaluator, based on (i) a current individual performance metric for the associated performance evaluator, (ii) the plurality of maturity levels defined for the associated performance evaluator, (iii) the one or more relevant recommended solutions provided for the associated performance evaluator, and (iv) an impact weight value defined for each of the one or more relevant recommended solutions provided for the associated performance evaluator; and calculating, an enterprise operation simulated maturity score for each enterprise operation, based on the individual simulated maturity score for each performance evaluator of the one or more performance evaluators, to allow for optimizing performance of each enterprise operation.

In an embodiment, the one or more maturity ratings for each performance evaluator are defined based on the individual performance value for the associated performance evaluator.

In an embodiment, the one or more maturity ratings for each performance evaluator are (i) higher the individual performance value, better is a performance of the associated enterprise operation, (ii) lower the individual performance value, better is the performance of the associated enterprise operation.

In an embodiment, one or more recommended solutions for each performance evaluator are derived based on the individual performance value provided for the associated performance evaluator, from a plurality of recommended solutions defined for each performance evaluator, stored in a knowledge engine.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an exemplary block diagram of a system for optimizing performance of enterprise operations using maturity assessment, in accordance with some embodiments of the present disclosure.
FIG. 2 is an exemplary block diagram illustrating a plurality of modules of the system of FIG. 1, for optimizing performance of enterprise operations using maturity assessment, in accordance with some embodiments of the present disclosure.
FIGS. 3A-3B illustrate exemplary flow diagrams of a processor-implemented method for optimizing performance of enterprise operations using maturity assessment, using the system of FIG. 1, in accordance with some embodiments of the present disclosure.

FIG. 4 shows an exemplary enterprise operation maturity scope for the accounts payable enterprise operation, in accordance with some embodiments of the present disclosure.

FIG. 5 illustrate an exemplary flow diagram for simulating the one or more recommended solutions provided for each performance evaluator, to validate the one or more recommended solutions provided for each performance evaluator, in accordance with some embodiments of the present disclosure.

FIG. 6 shows an exemplary selection of the relevant recommended solutions for performance evaluator 'days payable outstanding' related to the accounts payable enterprise operation, in accordance with some embodiments of the present disclosure.

FIG. 7 shows variation of current enterprise operation maturity score and the simulated enterprise operation maturity score after simulating the recommended solutions, in accordance with some embodiments of the present disclosure.

FIG. 8 shows an exemplary selection of the relevant recommended solutions for performance evaluator to meet a target enterprise operation maturity score, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

An enterprise operation is a collection of business tasks and activities that when performed by people or systems in a structured course, produces an outcome that contributes to business goals. The continuous and repeated execution of enterprise operations is essential to successful business operations and business growth. Enterprise operations vary depending upon the type, industry, geography, etc., of a business. Typical enterprise operations are categorized into three main segments:

(i) Business Domain: Enterprise operations are aligned to core industry operations such as meter to cash for utilities.
(ii) Business Horizontal: Enterprise operations aligned to enterprise business functions such as HR operations, Finance & Accounting, Customer Engagement Management etc.
(iii) Technology Horizontal: Enterprise operations aligned to technology operations such as IT Infrastructure services (e.g., Datacenter, Network, Workspace, etc.), IT Applications (e.g., SAP Operations).

Enterprise operation aligned to business horizontal and technology horizontal are practiced across various types of industries. The enterprise operations maturity assessment helps business leaders to assess an enterprise operation maturity of each enterprise operation and the one or more enterprise operations of an organization and to guide decision makers for a potential improvement of the organization. However, the existing enterprise operations maturity assessment frameworks are inefficient and lack comprehensive and integrated coverage of all the layers of the enterprise operations, as they are complex and time-consuming, and as the maturity assessment process involve data collection and analysis through multiple templates and data sources.

The present disclosure solves the technical problems in the art with the methods and systems for optimizing performance of enterprise operations using maturity assessment. The methods and systems of the present disclosure compute or assess a maturity score of the enterprise operation on a predefined maturity scale. The maturity score of the enterprise operation is determined based on responses to a set of evaluators which are provided as inputs. These evaluators are described as the key performance indicators for a given enterprise operation. The enterprise operation maturity assessment outcomes comprise of current overall enterprise operation maturity score, benchmarks for key performance indicators, and solutions to achieve improved maturity levels.

The methods and systems of the present disclosure leverages a benchmarking engine to derive benchmarks for individual metrics. The methods and systems of the present disclosure uses a knowledge engine to provide a list of recommended (transformation) solutions to achieve improvement in individual metric performance. The methods and systems of the present disclosure allow to select all or a subset of recommended solutions and simulate the improvement in the overall enterprise operation maturity score. The methods and systems of the present disclosure further allow to simulate the improvement in individual metric performance values based the recommended solutions selected for the individual metric.

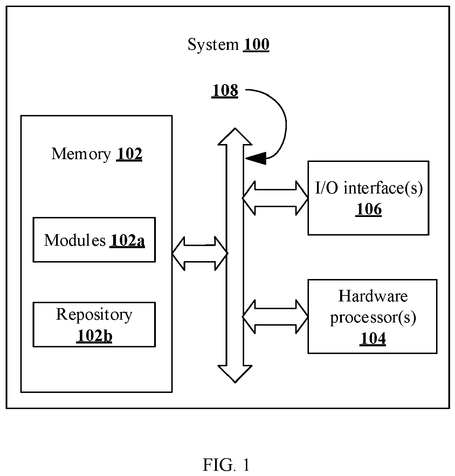

Referring now to the drawings, and more particularly to FIG. 1 through FIG. 8, where similar reference characters denote corresponding features consistently throughout the figures, there are shown preferred embodiments and these embodiments are described in the context of the following exemplary systems and/or methods.

FIG. 1 is an exemplary block diagram of a system 100 for optimizing performance of enterprise operations using maturity assessment, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface (GUI), and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

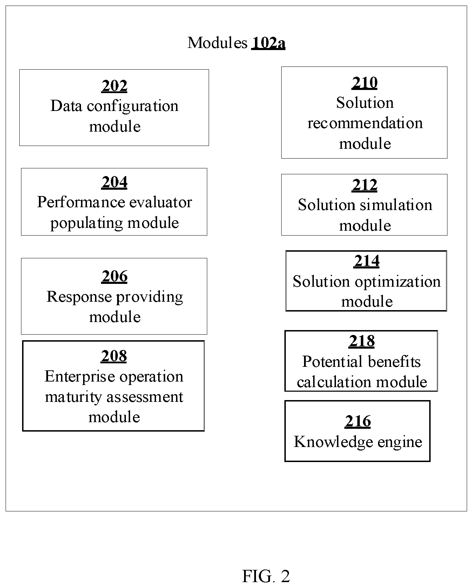

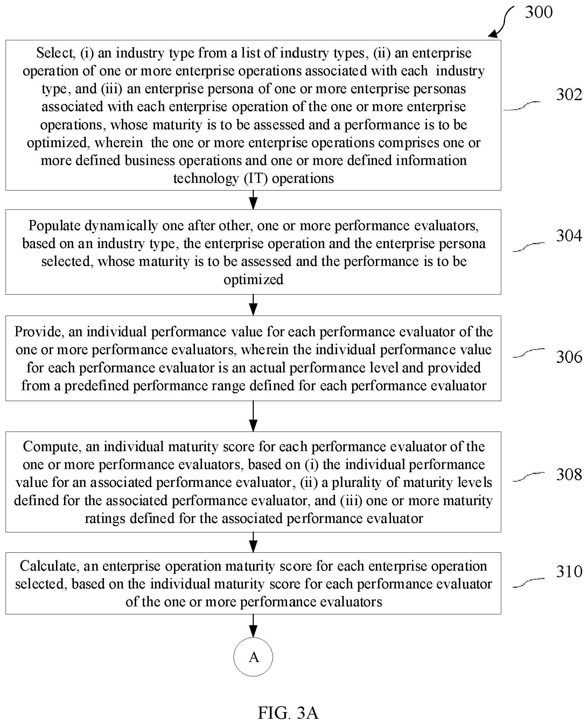

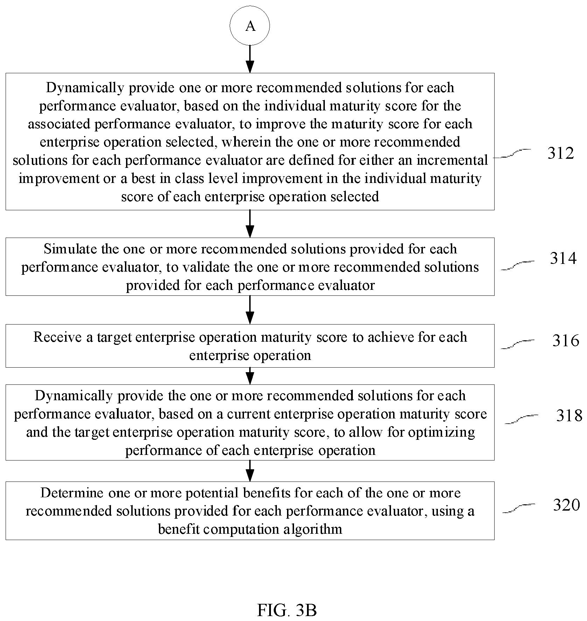

Referring collectively to FIG. 2 and FIGS. 3A-3B, components and functionalities of the system 100 are described in accordance with an example embodiment of the present disclosure. For example, FIG. 2 is an exemplary block diagram illustrating the plurality of modules 102a of the system 100 of FIG. 1, for optimizing performance of enterprise operations using maturity assessment, in accordance with some embodiments of the present disclosure. In an embodiment, the plurality of modules 102a includes a data configuration module 202, a performance evaluator populating module 204, a response providing module 206, an enterprise operation maturity assessment module 208, a solution recommendation module 210, a solution simulation module 212, a solution optimization module 214, a knowledge engine 216, and a potential benefits calculation module 218. In an embodiment, the plurality of modules 102a are collectively referred as an enterprise operation maturity assessment and performance optimization tool (not shown in FIG. 2). In an embodiment, the knowledge engine 216 utilizes cognitive intelligence for operating/performing diverse features and for making dynamic decision making.

For example, FIGS. 3A-3B illustrate exemplary flow diagrams of a processor-implemented method 300 for optimizing performance of enterprise operations using maturity assessment, using the system 100 of FIG. 1, in accordance with some embodiments of the present disclosure. Although steps of the method 300 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 302 of the method 300, the one or more hardware processors 104 of the system 100 are configured to first select an industry type from a list of industry types, by a user to initiate maturity assessment. In an embodiment, the list of industry types includes but are not limited to Banking and Financial Services, Consumer Packaged Goods, Energy & Resources, Healthcare, High-Tech and Professional services, Insurance, Life Sciences, Manufacturing, Media and Information Services, Retail, Telecom, Travel, Transportation and Hospitality, and Utilities. In an embodiment, the user selects one industry from the list of industry types using the I/O interface(s) 106. For example, the list of industry types may be provided in the form of a list box, a drop down, or a radio button and the user can select one industry type, through the GLTI.

Once an industry type is selected, then the one or more hardware processors 104 of the system 100 are configured to select an enterprise operation of one or more enterprise operations associated with each industry type selected, by the user, whose maturity is to be assessed and a performance is to be optimized. The one or more enterprise operations include one or more defined business operations and one or more defined information technology (IT) operations. More specifically, the one or more enterprise operations are associated with (i) Business Domain, (ii) Business Horizontal, and (iii) Technology Horizontal. The enterprise operations classified under the Business Domain are aligned to core industry operations such as meter to cash for utilities. The enterprise operations classified under the Business Horizontal are aligned to enterprise business functions such as HR operations, Finance & Accounting, Customer Engagement Management, and so on. The enterprise operations classified under the Technology Horizontal are aligned to technology operations such as middleware, network, database, service desk etc.

In an embodiment, the one or more enterprise operations associated with each industry may vary in number or operations type, typically based on the industry type. In an embodiment, the user selects one enterprise operation or more than one enterprise operations, whose maturity assessment to be computed, using the I/O interface(s) 106. For example, the list of enterprise operations may be provided in the form of the list box, the drop down, or the radio button and the user can select one enterprise operation or more than one enterprise operations, through the GLTI.

Once the industry type and the enterprise operation are selected, then the one or more hardware processors 104 of the system 100 are configured to select an enterprise persona of one or more enterprise personas associated with each enterprise operation of the one or more enterprise operations, by the user, whose maturity is to be assessed and the performance is to be optimized. In an embodiment, the one or more enterprise personas associated with each enterprise operation include but are not limited to executive level, and functional level.

In an embodiment, the executive level persona-based assessment is aligned to the CXO level managers (such as CEO, CFO, CTO, and so on) from a client organization (industry). The functional level persona-based assessment is aligned to operations heads. In an embodiment, the user selects one enterprise persona or more than one enterprise personas, whose maturity assessment to be computed, using the I/O interface(s) 106. For example, the list of enterprise personas may be provided in the form of the list box, the drop down, or the radio button and the user can select one enterprise persona or more than one enterprise personas, through the GLTI.

In an embodiment, the maturity may be assessed based on the need and the requirement. For example, the maturity may be assessed under the industry level by selecting all the enterprise operations present in the corresponding industry. Similarly, the maturity may be assessed under the enterprise operation level by selecting one or more enterprise operations present in the corresponding industry. Similarly, the maturity may be assessed under the persona level, by selecting the one or more enterprise personas corresponding to the one or more enterprise operations selected.

In an embodiment, the user may be referred as an assessor who may the person defined as the enterprise persona associated to the enterprise operation or may the person under higher management. For example, the assessor may be the operations head if the functional level enterprise persona is selected. Similarly, the assessor may be the CEO if the executive level enterprise persona is selected, and so on. In an embodiment, selecting the industry type, the enterprise operation and the enterprise persona is achieved through the data configuration module 202 using the I/O interface(s) 106.

An end-to-end example is provided to show the working of the steps of the method 300 of the present disclosure. In the end-to-end example, assume that the enterprise operation selected by the user is Accounts Payable enterprise operation which is part of the Finance & Accounting function.

At step 304 of the method 300, the one or more hardware processors 104 of the system 100 are configured to populate dynamically one after other, one or more performance evaluators, based on an industry type, the enterprise operation and the enterprise persona selected at step 302 of the method 300, whose maturity is to be assessed and the performance is to be optimized. In an embodiment, the one or more performance evaluators are a set of key performance indicators (KPIs) or questionnaires related to the industry type, the enterprise operation and the enterprise persona selected at step 302 of the method 300. In an embodiment, dynamically populating the one or more performance evaluators is achieved through the performance evaluator populating module 204 using the I/O interface(s) 106.

In an embodiment, the knowledge engine 216 includes a plurality of questionnaires ($KPI1, KPI2, KPI3, ..., KPIn$), that are defined to measure the performance of the enterprise operations for each industry type and each persona type. The one or more hardware processors 104 of the system 100 are configured to populate dynamically the questionnaire ($KPI1, KPI2, KPI3, ..., KPIm$), related to the enterprise operation selected at step 302 of the method 300, out of the plurality of questionnaires ($KPI1, KPI2, KPI3, ..., KPIn$), present in the knowledge engine 216. In an embodiment, the system 100 is configured with an intelligence to select only the questionnaire ($KPI1, KPI2, KPI3, ...,KPIm$), related to the enterprise operation selected at step 302 of the method 300.

For example, if the enterprise operation is Accounts Payable selected at step 302 of the method 300, then the one or more performance evaluators associated to the Accounts Payable enterprise operation related to Days Payable Outstanding ($KPI1$), Cost per Invoice ($KPI2$), % of Invoices under queries ($KPI3$), etc.

More specifically, below are the exemplary performance evaluators (KPIs) associated to the Accounts Payable enterprise operation:

(i) What is the cost per invoice?
(ii) What is the % of invoices which are paid on time?
(iii) What is the % of invoices where the discount is availed?

At step 306 of the method 300, the one or more hardware processors 104 of the system 100 are configured to provide an individual performance value for each performance evaluator of the one or more performance evaluators ($KPI1, KPI2, KPI3, ..., KPIm$) dynamically populated at step 304 of the method 300. The individual performance value for each performance evaluator is an actual (current) performance level and provided as responses or in the form of answers, from a predefined performance range defined for each performance evaluator. In an embodiment, providing the individual performance value for each performance evaluator is achieved through the response providing module 206 using the I/O interface(s) 106.

For example, the predefined performance range for the Accounts Payable process metric Days Payable Outstanding may be 0-120 days. Then, an exemplary current performance data for the Accounts Payable process metric Days Payable Outstanding as 75 Days in the end-to-end example. In some cases, the individual performance value may be beyond the lower and upper limit of the predefined performance range.

At step 308 of the method 300, the one or more hardware processors 104 of the system 100 are configured to compute an individual maturity score for each performance evaluator of the one or more performance evaluators ($KPI1, KPI2, KPI3, ..., KPIm$) populated at step 304 of the method 300. In an embodiment, the individual maturity score for each performance evaluator is computed based on (i) the individual performance value for an associated performance evaluator provided at step 306 of the method 300, (ii) a plurality of maturity levels defined for the associated performance evaluator, and (iii) one or more maturity ratings defined for the associated performance evaluator.

In an embodiment, the plurality of maturity levels is defined for each performance evaluator in terms of benchmarking maturity levels based on the nature of the performance evaluator. In an embodiment, the benchmarking maturity levels for a given performance evaluator includes 4 maturity levels and can be referred as initial ($L_1$), resilient( $L_2$), adaptive ($L_3$), and cognitive ($L_4$), where initial ($L_1$) being the lowest maturity level of the corresponding performance evaluator and cognitive ($L_4$) being the highest or best-in-class maturity level of the corresponding performance evaluator. The maturity assessment is performed based on the present maturity level of the corresponding performance evaluator. Given the one or more performance evaluators are ($KPI1, KPI2, KPI3, and KPI4$) and the 4 maturity levels referred as initial ($L_1$), resilient( $L_2$), adaptive ($L_3$), and cognitive ($L_4$), then the benchmarking maturity levels for the performance evaluator $KPI1$ can be referred as $KPI1_{L_1}, KPI1_{L_2}, KPI1_{L_3}, and KPI1_{L_4}$.

In an embodiment, the one or more maturity ratings are defined for the associated performance evaluator, based on the nature of the individual performance metric for the associated performance evaluator. In an embodiment, the one or more maturity ratings for each performance evaluator are defined under two classes. In the first class, the maturity rating is defined based on: higher the individual performance value, better is a performance of the associated enterprise operation. For example, the higher the percentage of invoices paid on time better is the performance of the associated enterprise operation. In the second class, the maturity rating is defined based on: the lower the individual performance value, the better is the performance of the associated enterprise operation. For example, the lower the percentage of invoices with discounts availed, the better is the performance of the associated enterprise operation.

Hence, the individual maturity score for each performance evaluator is computed based on the individual performance value for an associated performance evaluator, the plurality of maturity levels defined for the associated performance evaluator, and the maturity rating defined for the associated performance evaluator.

In an embodiment, the individual maturity score (*KPIM*) for each performance evaluator (*KPI*) having the maturity rating as: higher the individual performance value, better is the performance of the associated enterprise operation, is computed using a general equation 1:

$$KPIM = \frac{(KPI - PreviousScale)}{(NextScale - PreviousScale)} + ScaleIncrementalValue \qquad (1)$$

Wherein the variables PreviousScale, NextScale, *ScaleIncrementalValue* are defined using the below logic:

$$If\ KPI1_{L1} \leq KPI1 \leq KPI1_{L2}\ Then$$

$$KPIM1 = \frac{(KPI1 - KPI1_{L1})}{(KPI1_{L2} - KPI1_{L1})} + 1$$

$$If\ KPI1_{L2} \leq KPI1 \leq KPI1_{L3}\ Then$$

$$KPIM1 = \frac{(KPI1 - KPI1_{L2})}{(KPI1_{L3} - KPI1_{L2})} + 2$$

$$If\ KPI1_{L3} \leq KPI1 \leq KPI1_{L4}\ Then$$

$$KPIM1 = \frac{(KPI1 - KPI1_{L3})}{(KPI1_{L4} - KPI1_{L3})} + 3$$

In another embodiment, the individual maturity score (*KPIM*) for each performance evaluator (*KPI*) having the maturity rating as: lower the individual performance value, better is the performance of the associated enterprise operation, is computed using a general equation 2:

$$KPIM2 = \frac{(PreviousScale - KPI2)}{(PreviousScale - NextScale)} + ScaleIncrementalValue \qquad (2)$$

Wherein the variables PreviousScale, NextScale, *ScaleIncrementalValue* are defined using the below logic:

$$If\ KPI1_{L1} \leq KPI2 \leq KPI1_{L2}\ Then$$

$$KPIM2 = \frac{(KPI1_{L1} - KPI2)}{(KPI1_{L1} - KPI1_{L2})} + 1$$

$$If\ KPI1_{L2} \leq KPI2 \leq KPI1_{L3}\ Then$$

$$KPIM2 = \frac{(KPI1_{L2} - KPI2)}{(KPI1_{L2} - KPI1_{L3})} + 2$$

$$If\ KPI1_{L3} \leq KPI2 \leq KPI1_{L4}\ Then$$

$$KPIM2 = \frac{(KPI1_{L3} - KPI2)}{(KPI1_{L3} - KPI1_{L4})} + 3$$

Similarly, the individual maturity score for each performance evaluator is computed using either the general equation 1 or the general equation 2 based on the individual performance value, the plurality of maturity levels, and the maturity rating.

At step 310 of the method 300, the one or more hardware processors 104 of the system 100 are configured to calculate an enterprise operation maturity score for each enterprise operation selected at step 302 of the method 300, based on the individual maturity score for each performance evaluator of the one or more performance evaluators computed at step 308 of the method 300. In an embodiment, the enterprise operation maturity score( $PM(Y)$ ), for the selected enterprise operation ($Y$) is computed by aggregating the individual metric maturity score of all performance evaluators, using equation 5.

$$PM(Y) = \frac{\sum_{i=1}^{m} KPIM_i}{\sum i} \tag{3}$$

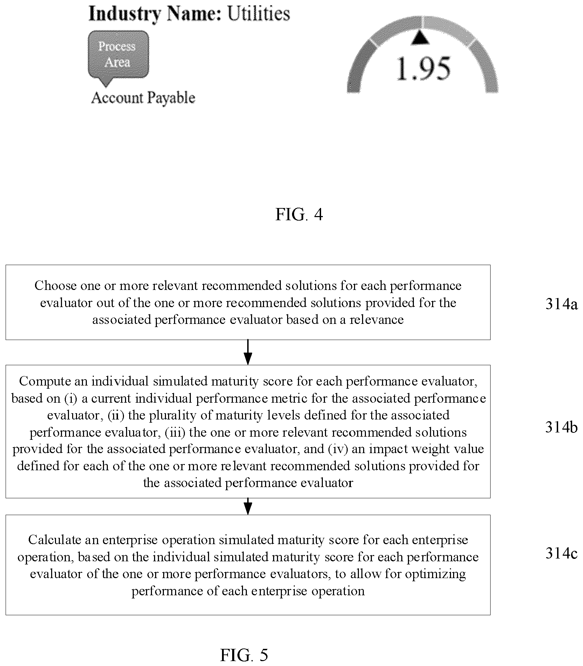

In an embodiment, the enterprise operation maturity score of each enterprise operation and the individual maturity score for each performance evaluator of the one or more performance evaluators are performed through the enterprise operation maturity assessment module 208. Further the enterprise operation maturity assessment module 208 is configured to generate an enterprise operation maturity assessment report having the enterprise operation maturity score of each enterprise operation and the individual maturity score for each performance evaluator of the one or more performance evaluators. In an embodiment, the enterprise operation maturity score of each enterprise operation and the individual maturity score for each performance evaluator of the one or more performance evaluators are stored in the knowledge engine 216, for future use and the reference. FIG. 4 shows an exemplary enterprise operation maturity scope for the accounts payable enterprise operation, in accordance with some embodiments of the present disclosure. As shown in FIG. 4, the exemplary enterprise operation maturity scope for the accounts payable enterprise operation is 1.95 in the end-to-end example.

At step 312 of the method 300, the one or more hardware processors 104 of the system 100 are configured to dynamically provide one or more recommended solutions for each performance evaluator, based on the individual maturity score for the associated performance evaluator, calculated at step 310 of the method 300. The one or more recommended solutions for each performance evaluator are to improve the maturity score of the enterprise operation selected at step 302 of the method 300.

The one or more recommended solutions for each performance evaluator are derived based on the individual performance value provided for the associated performance evaluator at step 306 of the method 300, from a plurality of recommended solutions defined for each performance evaluator, stored in the knowledge engine 216. In an embodiment, dynamically providing the one or more recommended solutions for each performance evaluator are achieved through the solution recommendation module 210 using the I/O interface(s) 106.

The one or more recommended solutions for each performance evaluator are defined for either an incremental improvement or a best-in-class level improvement in the individual maturity score of each enterprise operation selected at step 302 of the method 300. For example, if the current maturity level of the enterprise operation through the set of performance evaluators stands at initial ($L_1$), the one or more recommended solutions for each performance evaluator are defined for either an incremental improvement such as resilient( $L_2$), or the best-in-class level such as cognitive ($L_4$).

Post determining the enterprise operation maturity score and the individual performance metric for each performance evaluator, the system 100 is configured to visualizes the enterprise operation maturity results and suggests the recommended solutions through the graphical user interface. For example, the results visualizations for the enterprise operation $Y$ include the enterprise operation maturity score $PM(Y)$, laggards and the best-in-class benchmarks for the individual maturity scores of each performance evaluator, and the recommended solutions to improve the individual maturity scores of each performance evaluator. The recommended solutions are derived by the logic code defined in the system based on the inputs received to the defined set of performance evaluators. In one embodiment, the solution recommendation module 210 is configured to dynamically suggest the relevant solutions for each performance evaluator based on the respective individual maturity score. The solution set is displayed as recommended practice in the output report.

Consider the maturity levels initial ($L_1$), resilient( $L_2$), adaptive ($L_3$), and cognitive ($L_4$) for each performance evaluator, and the knowledge engine 216 contains the recommended solution sets for each for each performance evaluator corresponding to maturity resilient ( $L_2$), adaptive ($L_3$), and cognitive ($L_4$) say $S_2$, $S_3$, $S_4$ respectively. For example, the knowledge engine 216 has solution set $S_2$ aligned to $L_2$ maturity level for all maturity scores defined for the enterprise operation Y. Further, the solution set $S_2$ has individual solution set defined for the performance evaluator (*KPI*1) say $S_2KPI$1. Similarly, solution set $S_2$ has individual solutions defined or the performance evaluator (*KPI*2) say $S_2KPI2$. Further, solution set $S_3$ is aligned to $L_3$ maturity level for all metrics defined for the enterprise operation Y. The solution set $S_3$ has individual solution set defined for the performance evaluator *(KPI1)* say $S_3KPI$1. Lastly, the solution set $S_4$ is aligned to $L_4$ maturity level for all metrics defined for the enterprise operation Y.

The solution set $S_4$ has individual solution set defined for the performance evaluator *(KPI1)* say $S_4KPI1$. The solution recommendation module 210 is configured to display two sets of recommendations for each performance evaluator. In one embodiment, the solution recommendation module 210 derives the set of solutions for *KPI*1 from the knowledge engine 216 dynamically based on the individual maturity score. In one embodiment, the solution recommendation module 210 displays the dynamic solution set for *KPI*1 say $SD_{KPI1}$ relevant to achieve next maturity level. The calculation is based on the following logic.

$$If\ KPIM1 \leq 1\ then$$

$$SD_{KPI1} = S2_{KPI1}$$

$$If\ 1 < KPIM1 < 2\ then$$

$$SD_{KPI1} = S2_{KPI1}$$

$$If\ 2 \leq KPIM1 < 3\ then$$

$$SD_{KPI1} = S3_{KPI1}$$

$$If\ 3 \leq KPIM1 \leq 4\ then$$

$$SD_{KPI1} = S4_{KPI1}$$

In another embodiment, the solution recommendation module 210 derives the set of solutions for *KPI*1 from the knowledge engine 216 always aligned to best-in-class $L_4$ maturity level, i.e., cognitive. The solution set is displayed as benchmark practices in the output report. The solution recommendation module 210 displays the $L_4$ solution set for *KPI*1 say $SL_4KPI1$ relevant to achieve level 4 maturity.

At step 314 of the method 300, the one or more hardware processors 104 of the system 100 are further configured to simulate the one or more recommended solutions provided for each performance evaluator, through the solution simulation module 212, to validate the one or more recommended solutions provided for each performance evaluator at step 312 of the method 300. FIG. 5 illustrate an exemplary flow diagram for simulating the one or more recommended solutions provided for each performance evaluator, to validate the one or more recommended solutions provided for each performance evaluator, in accordance with some embodiments of the present disclosure. As shown in FIG. 5, simulating the one or more recommended solutions provided for each performance evaluator is explained through steps 314a through 314c.

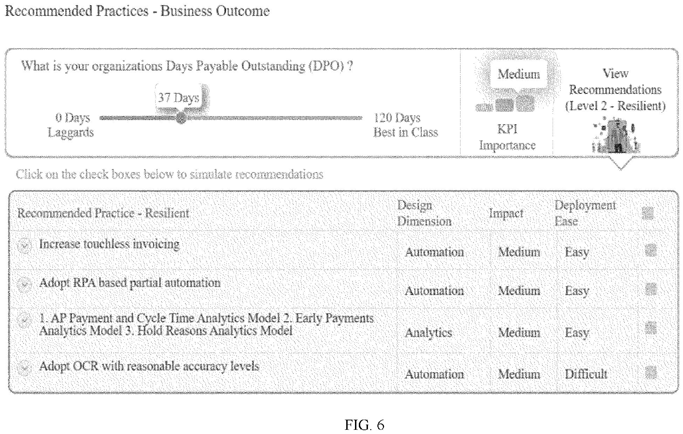

At step 314a, one or more relevant recommended solutions for each performance evaluator out of the one or more recommended solutions provided for the associated performance evaluator at step 312 of the method 300 are selected by the user or the assessor. The one or more relevant recommended solutions for each performance evaluator are selected based on a relevance. In an embodiment, the relevance may be related to current market situations, business opportunities, and the current performance level of the enterprise operation. The system 100 is configured to allow the user to select a subset or all the recommended practices for a given performance evaluator. For example, for *KPI1,* the user may select either a subset or all recommended practices $SD_{KPI1}$. Further based on the selections made by the user, the solution simulation module 212 calculates the improvement in each individual maturity score. FIG. 6 shows an exemplary selection of the relevant recommended solutions for performance evaluator 'days payable outstanding' related to the accounts payable enterprise operation, in accordance with some embodiments of the present disclosure.

At step 314b, an individual simulated maturity score for each performance evaluator is computed in light to the one or more relevant recommended solutions for each performance evaluator. The individual simulated maturity score for each performance evaluator is computed based on (i) a current individual performance metric for the associated performance evaluator, (ii) the plurality of maturity levels defined for the associated performance evaluator, (iii) the one or more relevant recommended solutions provided for the associated performance evaluator, and (iv) an impact weight value defined for each of the one or more relevant recommended solutions provided for the associated performance evaluator.

In an embodiment, the current individual performance metric for the associated performance evaluator is either the individual performance metric for the associated performance evaluator based on the individual performance value provided at step 306 of the method 300 or the current individual performance metric computed for the associated performance evaluator. The plurality of maturity levels defined for the associated performance evaluator, and the one or more relevant recommended solutions provided for the associated performance evaluator are same as mentioned at step 308 of the method 300.

In an embodiment, an impact weight value defined for each of the one or more relevant recommended solutions provided for the associated performance evaluator, refer to the weights assigned to the one or more relevant recommended solutions based on the priority or the business strategy. The impact weight value is defined for each of the one or more relevant recommended solutions by the assessor.

In an embodiment, the solution simulation module 212 assigns the impact weight value for each of the one or more relevant recommended solutions. The solution weight values are based on the impact of the solution on the enterprise operation performance post implementation. In an embodiment, the impact of the solution is classified into 3 categories, High, Medium, and Low. The exemplary solution weight values assigned by the solution simulation module 212 are 16.3%, 8.2% and 4% for High, Medium, and low impact categories respectively.

For example, $SD_{KPI1}$ comprises of a set of recommended solutions for $KPI_1$ and have associated impact weight values as $iw_H$, $iw_M$, and $iw_L$. To illustrate the simulated maturity score calculation for recommended solutions for $KPI1$, select from defined solution set $SD_{KPI1}$. Consider the maturity benchmark levels defined for $KPI_1$ across 4 maturity levels, as $KPI1_{L1}$, $KPI1_{L2}$, $KPI1_{L3}$, $KPI1_{L4}$. In continuation with the above example, the following variables are defined:

(i) Number of high impact $SD_{KPI1}$ solutions = $i$

(ii) Number of medium impact $SD_{KPI1}^{1}$ solutions = $j$

(iii) Number of low impact $SD_{KPI1}$ solutions = $k$

The individual simulated maturity score for $KPI1$ is calculated using below logic:

$$If\ KPI1_{L1} \leq KPI1_{current} \leq KPI1_{L2}\ then$$

$$SimKPI1 = KPI1_{current} + (((KPI1_{L3} - KPI1_{current}) * (i * iw_H)) \\ + ((KPI1_{L3} - KPI1_{current}) * (j * iw_M)) \\ + ((KPI1_{L3} - KPI1_{current}) * (k * iw_L)))$$

$$If\ KPI1_{L2} \leq KPI1_{current} \leq KPI1_{L3}\ then$$

$$SimKPI1 = KPI1_{current} + (((KPI1_{L4} - KPI1_{current}) * (i * iw_H)) \\ + ((KPI1_{L4} - KPI1_{current}) * (j * iw_M)) \\ + ((KPI1_{L4} - KPI1_{current}) * (k * iw_L)))$$

$$If\ KPI1_{L3} \leq KPI1_{current} \leq KPI1_{L4}\ then$$

$$If\ ((i * iw_H) + (j * iw_M) + (k * iw_l)) > 80\%\ then$$

$$SimKPI1 = KPI1_{current} + (70\% * (KPI1_{L4} - KPI1_{current}))$$

$$Else\ if\ 50\% \leq \big((i * iw_H) + (j * iw_M) + (k * iw_l)\big) \leq 80\%\ then$$

$$SimKPI1 = KPI1_{current} + (50\% * (KPI1_{L4} - KPI1_{current}))$$

$$Else\ if\ \big((i * iw_H) + (j * iw_M) + (k * iw_l)\big) \leq 50\%\ then$$

$$SimKPI1 = KPI1_{current} + (10\% * (KPI1_{L4} - KPI1_{current}))$$

Further the solution simulation module 212 calculates the individual simulated maturity score for *KPI*1 using the logic as explained at step 308 of the method 300 based on the one or more maturity ratings defined for the associated performance evaluator. Similarly, the solution simulation module 212 calculates the individual simulated maturity score for all the performance evaluators for which the recommended solutions are selected by the user.

At step 314c, the enterprise operation simulated maturity score for each enterprise operation, is calculated based on the individual simulated maturity score for each performance evaluator of the one or more performance evaluators, computed at step 314b. In an embodiment,

In an embodiment, the enterprise operation simulated maturity score *SPM*(*Y*)for each enterprise operation *Y* is computed by aggregating the simulated maturity score of all performance evaluators, using below equation:

$$SPM(Y) = \frac{\sum_{i=1}^{n} SimKPIM_i}{\sum i} \tag{4}$$

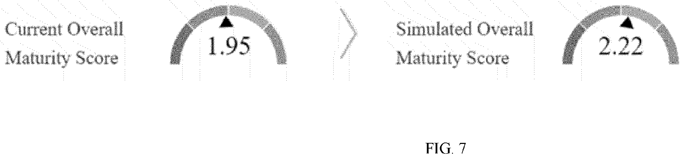

The calculated enterprise operation simulated maturity score for each enterprise operation allow the user or the assessor to optimize the performance of the corresponding enterprise operation using the one or more relevant recommended solutions selected for each performance evaluator, through the solution optimization module 214. FIG. 7 shows variation of current enterprise operation maturity score and the simulated enterprise operation maturity score after simulating the recommended solutions, in accordance with some embodiments of the present disclosure. As shown in FIG. 7, the current enterprise operation maturity score is 1.95, whereas the simulated enterprise operation maturity score after simulating the recommended solutions became 2.22. Because the simulated enterprise operation maturity score is more compared to the current enterprise operation maturity score, then the recommended solutions provided are considered as valid solutions for the implementation to increase the overall maturity score of the enterprise operation.

At step 316 of the method 300, the one or more hardware processors 104 of the system 100 are further configured to receive a target enterprise operation maturity score to achieve for each enterprise operation from the user. The target enterprise operation maturity score is the required maturity score from the current maturity score of the corresponding enterprise operation.

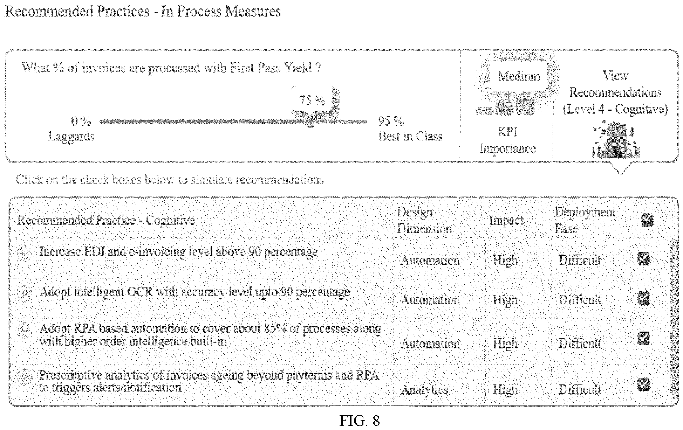

At step 318 of the method 300, the one or more hardware processors 104 of the system 100 are configured to dynamically provide the one or more recommended solutions for each performance evaluator, based on the current enterprise operation maturity score and the target enterprise operation maturity score, through the solution recommendation module 210. The provided the one or more recommended solutions for each performance evaluator allow the user for optimizing performance of each enterprise operation. Further, the one or more recommended solutions for each performance evaluator provided to achieve the target enterprise operation maturity score may be simulated as explained at step 314 of the method 300 for the validation before the implementation. FIG. 8 shows an exemplary selection of the relevant recommended solutions for performance evaluator to meet a target enterprise operation maturity score, in accordance with some embodiments of the present disclosure.

At step 320 of the method 300, the one or more hardware processors 104 of the system 100 are configured to determine one or more potential benefits for each of the one or more recommended solutions provided for each performance evaluator, using a benefit computation algorithm. The potential benefits calculation module 218 includes the benefit computation algorithm and is configured to determine one or more potential benefits for each of the one or more recommended solutions.

The one or more potential benefits are the potential outcomes after optimizing the one or more recommended solutions provided for each performance evaluator. The benefit computation algorithm is used to compute benefits such as cost savings, working capital optimization through improvement in Days Sales Outstanding (DSO), days payable outstanding (DPO), etc. In continuation to the above example, let us consider the process Accounts Receivables and set of metrics, Days Sales Outstanding (DSO), % of overdue receivables, % of Bills paid on time, Bad Debts Written off.

The system 100 prompts the user for providing inputs to a set of pre-defined parameters for enterprise operation (*Y*). The set of pre-defined parameters for the above-mentioned metrics for Accounts Receivable process are listed as below:

$ Average credit sales per day for customer = $Z_1$
# DSO days reduced = $X_1$
DSO days = $Y_1$
% of overdue receivables reduced = $X_2$
% of overdue receivables turning into bad debt = $Y_2$
% of bill payment improved = $X_3$
Cost of collection per 1 Mn $ = $X_4$
% of bad debt reduced = $X_5$

The outcome variables calculated by Business benefits computation engine are defined as follows:

Cash flow/working capital improvement ($) = $CF_1$
Cost reduction ($) = $C_1$
Cost reduction ($) = $C_2$
Cost reduction ($) = $C_3$

The business benefits computation algorithm calculates the business value delivered for *KPI*1 i.e., Days Sales Outstanding as defined in equation below:

$$CF1 = Z_1 * X_1 \qquad (5)$$

The business benefits computation algorithm calculates the business value delivered for *KPI*1 i.e., % of overdue receivables as defined in equation below:

$$C1 = Z_1 * Y_1 * X_2 * Y_2 \qquad (6)$$

The business benefits computation algorithm calculates the business value delivered for *KPI*2 i.e., % of Bills paid on time as defined in equation below:

$$C2 = Z_1 * Y_2 * X_3 * (X_4/10^6) \qquad (7)$$

The business benefits computation algorithm calculates the business value delivered for *KPI*3 i.e., Bad Debts Written off as defined in equation below:

$$C3 = Z_1 * Y_2 * X_5 \qquad (8)$$

The business benefits computation algorithm calculates the business value delivered for Accounts Receivable enterprise operation based on the individual metric driven benefits calculated. Further the business benefits computation algorithm calculates the overall business benefit ($) for Accounts Receivable process as defined below:

$$BVR = CF1 + C1 + C2 + C3 \qquad (9)$$

The method and systems of the present disclosure make use of the one or more performance evaluators, maturity levels and the maturity ratings of each performance evaluator associated to the enterprise operation for calculating the maturity assessment of the enterprise operation. Hence the maturity assessment of the enterprise operation is dynamic and effective. The method and systems of the present disclosure allows the user or the assessor to select the industry type, the enterprise operation type and the enterprise persona based on the requirement and hence the maturity assessment of the enterprise operation can be performed based on the business goals and the requirements. Hence the enterprise operations maturity assessment framework of the present disclosure allows to measure the maturity assessment provides full stakeholder play and measures their respective KPIs given the enterprise persona.

The method and systems of the present disclosure determines the enterprise operation maturity score of the enterprise operation in a predefined scale. For example, the predefined scale may be from 1 to 4, where 1 being the lowest maturity score and 4 being the highest maturity score. Hence maturity levels of the present disclosure namely Initial, Resilient, Adaptive and Cognitive, enable to benchmark the enterprise operations effectively based on the enterprise operation maturity score.

The method and systems of the present disclosure enables to optimize the performance of such enterprise operation by simulating the recommendation solutions provided based on the current maturity score of the enterprise operation or by considering the target maturity score of the enterprise operation. Hence the method and systems of the present disclosure optimizes the performance of such enterprise operation efficiently.

The enterprise operation maturity assessment tool of the present disclosure provides comprehensive coverage of business operations across multiple industries, enterprise horizontal services, technology infrastructure functions and ERP Operations (SAP, Oracle). The enterprise operation maturity assessment tool of the present disclosure helps carry out maturity assessment for about 40 models from multiple industries, enterprise horizontal services, technology infrastructure functions and ERP Operations.

The enterprise operation maturity assessment framework of the present disclosure is adept at addressing the Business 4.0 landscape and able to measure the cognitive maturity of enterprise operations across four progressive levels of maturity namely, Initial, Resilient, Adaptive and Cognitive. Further, the enterprise operation maturity assessment framework of the present disclosure uses multi-faceted design dimensions such as Analytics, Automation, Agile, Security, Cloud, Talent. The knowledge engine of the present disclosure enables the cognitive maturity assessment and share solutions aligned to various design dimensions.

The enterprise operation maturity assessment framework of the present disclosure provides multiple & enhanced features listed below.

- One click business process discovery and maturity assessment
- Recommendations are aligned to multiple Business 4.0 dimensions
- Recommendations are dynamically identified with the help of in-built intelligence and are based on the current maturity level of individual metrics
- Assessor has option to set targets at an individual assessment parameter level and the tool accordingly identifies the appropriate solutions to be able to meet the target maturity.
- Allows the assessment parameters to be customized based on the Persona of the assessor.
- Simulate impact of selected solutions and view improvement in overall process maturity and improvement in individual metric performance.

The enterprise operation maturity assessment framework of the present disclosure enables the assessor to conduct a quick rapid assessment without the need to provide several input data points and helps the user conduct a rapid maturity assessment. Further, the enterprise operation maturity assessment framework of the present disclosure captures inputs from users on key performance metrics and computes individual metric maturity score on a scale of 1 to 4. The individual metric maturity scores are further aggregated to compute the overall enterprise operation maturity score. The assessment seeks very few data points from the user and doesn't need very extensive data input.

The enterprise operation maturity assessment framework of the present disclosure also allows assessor to decide from a set of recommendations which ones are most relevant for his/her organization and accordingly also instantaneously simulate the result of implementation of the assessor selected recommendations. The enterprise operation maturity assessment framework of the present disclosure enables the dynamic selection of solutions aligned to various design dimensions & simulate what if scenarios.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of optimizing performance of enterprise operations using the maturity assessment. The methods and systems of the present disclosure computes or assesses a maturity score of the enterprise operation on a predefined maturity scale. The maturity score of the enterprise operation is determined based on responses to a set of evaluators which are provided as inputs. These evaluators are described as the key performance indicators for a given enterprise operation. The enterprise operation maturity assessment outcomes comprise of current overall enterprise operation maturity score, benchmarks for key performance indicators, and solutions to achieve improved maturity levels.

The methods and systems of the present disclosure uses a knowledge engine to provide list of recommended (transformation) solutions to achieve improvement in individual metric performance. The methods and systems of the present disclosure allows to select all or a subset of recommended solutions and simulate the improvement in the overall enterprise operation maturity score. The methods and systems of the present disclosure further allows to simulate the improvement in individual metric performance values based the recommended solutions selected for the individual metric.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (300), comprising the steps of:

   selecting, via one or more hardware processors, (i) an industry type from a list of industry types, (ii) an enterprise operation of one or more enterprise operations associated with each industry type, and (iii) an enterprise persona of one or more enterprise personas associated with each enterprise operation of the one or more enterprise operations, whose maturity is to be assessed and a performance is to be optimized, wherein the one or more enterprise operations comprises one or more defined business operations and one or more defined information technology (IT) operations (302);
   populating dynamically one after other, via the one or more hardware processors, one or more performance evaluators, based on an industry type, the enterprise operation, and the enterprise persona selected, whose maturity is to be assessed and the performance is to be optimized (304);
   providing, via the one or more hardware processors, an individual performance value for each performance evaluator of the one or more performance evaluators, wherein the individual performance value for each performance evaluator is an actual performance level and provided from a predefined performance range defined for each performance evaluator (306);
   computing, via the one or more hardware processors, an individual maturity score for each performance evaluator

16

of the one or more performance evaluators, based on (i) the individual performance value for an associated performance evaluator, (ii) a plurality of maturity levels defined for the associated performance evaluator, and (iii) one or more maturity ratings defined for the associated performance evaluator (308);

calculating, via the one or more hardware processors, an enterprise operation maturity score for each enterprise operation selected, based on the individual maturity score for each performance evaluator of the one or more performance evaluators (310); and

dynamically providing, via the one or more hardware processors, one or more recommended solutions for each performance evaluator, based on the individual maturity score for the associated performance evaluator, to improve the maturity score for each enterprise operation selected, wherein the one or more recommended solutions for each performance evaluator are defined for either an incremental improvement or a best-in-class level improvement in the individual maturity score of each enterprise operation selected (312).

2.  The method as claimed claim 1, comprising simulating, via the one or more hardware processors, the one or more recommended solutions provided for each performance evaluator, to validate the one or more recommended solutions provided for each performance evaluator (314), wherein the simulation comprises:

    choosing one or more relevant recommended solutions for each performance evaluator out of the one or more recommended solutions provided for the associated performance evaluator based on a relevance (314a);

    computing an individual simulated maturity score for each performance evaluator, based on (i) a current individual performance metric for the associated performance evaluator, (ii) the plurality of maturity levels defined for the associated performance evaluator, (iii) the one or more relevant recommended solutions provided for the associated performance evaluator, and (iv) an impact weight value defined for each of the one or more relevant recommended solutions provided for the associated performance evaluator (314b); and

    calculating an enterprise operation simulated maturity score for each enterprise operation, based on the individual simulated maturity score for each performance evaluator of the one or more performance evaluators, to allow for optimizing performance of each enterprise operation (314c).

3.  The method as claimed in claim 1, comprising:

    receiving, via the one or more hardware processors, a target enterprise operation maturity score to achieve for each enterprise operation (316); and

    dynamically providing, via the one or more hardware processors, the one or more recommended solutions for each performance evaluator, based on a current enterprise operation maturity score and the target enterprise operation maturity score, to allow for optimizing performance of each enterprise operation (318).

4.  The method as claimed in claim 1, wherein the one or more maturity ratings for each performance evaluator are defined based on the individual performance value for the associated performance evaluator.

5.  The method as claimed in claim 1, wherein the one or more maturity ratings for each performance evaluator are (i) higher the individual performance value, better is a performance of the associated enterprise operation, (ii) lower the individual performance value, better is the performance of the associated enterprise operation.

6.  The method as claimed in claim 1, wherein the one or more recommended solutions for each performance evaluator are derived based on the individual performance value provided for the associated performance evaluator, from a plurality of recommended solutions defined for each performance evaluator, stored in a knowledge engine.

7.  The method as claimed in claim 1, comprising determining, via the one or more hardware processors, one or more potential benefits for each of the one or more recommended solutions provided for each performance evaluator, using a benefit computation algorithm (320).

8.  A system (100) comprising:

    a memory (102) storing instructions;
    one or more input/output (I/O) interfaces (106); and
    one or more hardware processors (104) coupled to the memory (102) via the one or more I/O interfaces (106), wherein the one or more hardware processors (104) are configured by the instructions to:

        select (i) an industry type from a list of industry types, (ii) an enterprise operation of one or more enterprise operations associated with each industry type, and (iii) an enterprise persona of one or more enterprise personas associated with each enterprise operation of the one or more enterprise operations, whose maturity is to be assessed and a performance is to be optimized, wherein the one or more enterprise operations comprises one or more defined business operations and one or more defined information technology (IT) operations;

populate dynamically one after other one or more performance evaluators, based on an industry type, the enterprise operation and the enterprise persona selected, whose maturity is to be assessed and the performance is to be optimized;

provide an individual performance value for each performance evaluator of the one or more performance evaluators, wherein the individual performance value for each performance evaluator is an actual performance level and provided from a predefined performance range defined for each performance evaluator;

compute an individual maturity score for each performance evaluator of the one or more performance evaluators, based on (i) the individual performance value for an associated performance evaluator, (ii) a plurality of maturity levels defined for the associated performance evaluator, and (iii) one or more maturity ratings defined for the associated performance evaluator;

calculate an enterprise operation maturity score for each enterprise operation selected, based on the individual maturity score for each performance evaluator of the one or more performance evaluators; and

dynamically provide one or more recommended solutions for each performance evaluator, based on the individual maturity score for the associated performance evaluator, to improve the maturity score for each enterprise operation selected, wherein the one or more recommended solutions for each performance evaluator are defined for either an incremental improvement or a best-in-class level improvement in the individual maturity score of each enterprise operation selected.

9. The system as claimed claim 8, wherein the one or more hardware processors (104) are further configured to simulate the one or more recommended solutions provided for each performance evaluator, to validate the one or more recommended solutions provided for each performance evaluator, wherein the simulation comprises:

choosing one or more relevant recommended solutions for each performance evaluator out of the one or more recommended solutions provided for the associated performance evaluator based on a relevance;

computing an individual simulated maturity score for each performance evaluator, based on (i) a current individual performance metric for the associated performance evaluator, (ii) the plurality of maturity levels defined for the associated performance evaluator, (iii) the one or more relevant recommended solutions provided for the associated performance evaluator, and (iv) an impact weight value defined for each of the one or more relevant recommended solutions provided for the associated performance evaluator; and

calculating an enterprise operation simulated maturity score for each enterprise operation, based on the individual simulated maturity score for each performance evaluator of the one or more performance evaluators, to allow for optimizing performance of each enterprise operation.

10. The system as claimed in claim 8, wherein the one or more hardware processors (104) are further configured to:

receive a target enterprise operation maturity score to achieve for each enterprise operation; and

dynamically provide the one or more recommended solutions for each performance evaluator, based on a current enterprise operation maturity score and the target enterprise operation maturity score, to allow for optimizing performance of each enterprise operation.

11. The system as claimed in claim 8, wherein the one or more maturity ratings for each performance evaluator are defined based on the individual performance value for the associated performance evaluator.

12. The system as claimed in claim 8, wherein the one or more maturity ratings for each performance evaluator are (i) higher the individual performance value, better is a performance of the associated enterprise operation, (ii) lower the individual performance value, better is the performance of the associated enterprise operation.

13. The system as claimed in claim 8, wherein the one or more recommended solutions for each performance evaluator are derived based on the individual performance value provided for the associated performance evaluator, from a plurality of recommended solutions defined for each performance evaluator, stored in a knowledge engine.

14. The system as claimed in claim 8, wherein the one or more hardware processors (104) are further configured to determine one or more potential benefits for each of the one or more recommended solutions provided for each performance evaluator, using a benefit computation algorithm.

15. One or more non-transitory machine-readable information storage mediums comprising one or more instructions which when executed by one or more hardware processors cause:

selecting (i) an industry type from a list of industry types, (ii) an enterprise operation of one or more enterprise operations associated with each industry type, and (iii) an enterprise persona of one or more enterprise personas associated with each enterprise operation of the one or more enterprise operations, whose maturity is to be assessed and a performance is to be optimized, wherein the one or more enterprise operations comprises one or more defined business operations and one or more defined information technology (IT) operations;

populating dynamically one after other one or more performance evaluators, based on an industry type, the enterprise operation, and the enterprise persona selected, whose maturity is to be assessed and the performance is to be optimized;

providing an individual performance value for each performance evaluator of the one or more performance evaluators, wherein the individual performance value for each performance evaluator is an actual performance level and provided from a predefined performance range defined for each performance evaluator;

computing an individual maturity score for each performance evaluator of the one or more performance evaluators, based on (i) the individual performance value for an associated performance evaluator, (ii) a plurality of maturity levels defined for the associated performance evaluator, and (iii) one or more maturity ratings defined for the associated performance evaluator;

calculating an enterprise operation maturity score for each enterprise operation selected, based on the individual maturity score for each performance evaluator of the one or more performance evaluators;

dynamically providing one or more recommended solutions for each performance evaluator, based on the individual maturity score for the associated performance evaluator, to improve the maturity score for each enterprise operation selected, wherein the one or more recommended solutions for each performance evaluator are defined for either an incremental improvement or a best-in-class level improvement in the individual maturity score of each enterprise operation selected;

receiving a target enterprise operation maturity score to achieve for each enterprise operation;

dynamically providing the one or more recommended solutions for each performance evaluator, based on a current enterprise operation maturity score and the target enterprise operation maturity score, to allow for optimizing performance of each enterprise operation; and

determining one or more potential benefits for each of the one or more recommended solutions provided for each performance evaluator, using a benefit computation algorithm.

FIG. 1

Modules **102a**

**202**
Data configuration
module

**210**
Solution
recommendation
module

**204**
Performance evaluator
populating module

**212**
Solution simulation
module

**206**
Response providing
module

**214**
Solution optimization
module

**208**
Enterprise operation
maturity assessment
module

**218**
Potential benefits
calculation module

**216**
Knowledge engine

FIG. 2

Select, (i) an industry type from a list of industry types, (ii) an enterprise operation of one or more enterprise operations associated with each industry type, and (iii) an enterprise persona of one or more enterprise personas associated with each enterprise operation of the one or more enterprise operations, whose maturity is to be assessed and a performance is to be optimized, wherein the one or more enterprise operations comprises one or more defined business operations and one or more defined information technology (IT) operations — 302

Populate dynamically one after other, one or more performance evaluators, based on an industry type, the enterprise operation and the enterprise persona selected, whose maturity is to be assessed and the performance is to be optimized — 304

Provide, an individual performance value for each performance evaluator of the one or more performance evaluators, wherein the individual performance value for each performance evaluator is an actual performance level and provided from a predefined performance range defined for each performance evaluator — 306

Compute, an individual maturity score for each performance evaluator of the one or more performance evaluators, based on (i) the individual performance value for an associated performance evaluator, (ii) a plurality of maturity levels defined for the associated performance evaluator, and (iii) one or more maturity ratings defined for the associated performance evaluator — 308

Calculate, an enterprise operation maturity score for each enterprise operation selected, based on the individual maturity score for each performance evaluator of the one or more performance evaluators — 310

A

FIG. 3A

A

Dynamically provide one or more recommended solutions for each performance evaluator, based on the individual maturity score for the associated performance evaluator, to improve the maturity score for each enterprise operation selected, wherein the one or more recommended solutions for each performance evaluator are defined for either an incremental improvement or a best in class level improvement in the individual maturity score of each enterprise operation selected ⟶ 312

Simulate the one or more recommended solutions provided for each performance evaluator, to validate the one or more recommended solutions provided for each performance evaluator ⟶ 314

Receive a target enterprise operation maturity score to achieve for each enterprise operation ⟶ 316

Dynamically provide the one or more recommended solutions for each performance evaluator, based on a current enterprise operation maturity score and the target enterprise operation maturity score, to allow for optimizing performance of each enterprise operation ⟶ 318

Determine one or more potential benefits for each of the one or more recommended solutions provided for each performance evaluator, using a benefit computation algorithm ⟶ 320

FIG. 3B

**Industry Name:** Utilities

Process
Area

1.95

Account Payable

FIG. 4

| | |
|---|---|
| Choose one or more relevant recommended solutions for each performance evaluator out of the one or more recommended solutions provided for the associated performance evaluator based on a relevance | 314a |
| Compute an individual simulated maturity score for each performance evaluator, based on (i) a current individual performance metric for the associated performance evaluator, (ii) the plurality of maturity levels defined for the associated performance evaluator, (iii) the one or more relevant recommended solutions provided for the associated performance evaluator, and (iv) an impact weight value defined for each of the one or more relevant recommended solutions provided for the associated performance evaluator | 314b |
| Calculate an enterprise operation simulated maturity score for each enterprise operation, based on the individual simulated maturity score for each performance evaluator of the one or more performance evaluators, to allow for optimizing performance of each enterprise operation | 314c |

FIG. 5

Recommended Practices - Business Outcome

What is your organizations Days Payable Outstanding (DPO) ?

37 Days

0 Days
Laggards

120 Days
Best in Class

Medium

KPI
Importance

View
Recommendations
(Level 2 - Resilient)

Click on the check boxes below to simulate recommendations

| Recommended Practice - Resilient | Design Dimension | Impact | Deployment Ease | |
|---|---|---|---|---|
| Increase touchless invoicing | Automation | Medium | Easy | |
| Adopt RPA based partial automation | Automation | Medium | Easy | |
| 1. AP Payment and Cycle Time Analytics Model 2. Early Payments Analytics Model 3. Hold Reasons Analytics Model | Analytics | Medium | Easy | |
| Adopt OCR with reasonable accuracy levels | Automation | Medium | Difficult | |

FIG. 6

Current Overall Maturity Score — 1.95 ❭ Simulated Overall Maturity Score — 2.22

FIG. 7

Recommended Practices - In Process Measures

What % of invoices are processed with First Pass Yield ?

75 %

0 % —————————————————————————— 95 %
Laggards                                  Best in Class

Medium

View
Recommendations
(Level 4 - Cognitive)

KPI
Importance

Click on the check boxes below to simulate recommendations

| Recommended Practice - Cognitive | Design Dimension | Impact | Deployment Ease | ☑ |
|---|---|---|---|---|
| Increase EDI and e-invoicing level above 90 percentage | Automation | High | Difficult | ☑ |
| Adopt intelligent OCR with accuracy level upto 90 percentage | Automation | High | Difficult | ☑ |
| Adopt RPA based automation to cover about 85% of processes along with higher order intelligence built-in | Automation | High | Difficult | ☑ |
| Prescritptive analytics of invoices ageing beyond payterms and RPA to triggers alerts/notification | Analytics | High | Difficult | ☑ |

FIG. 8

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/173353 A1 (KAMATH SHIRLEY [IN] ET AL) 4 July 2013 (2013-07-04)<br>* paragraph [0001] - paragraph [0002] *<br>* paragraph [0005] *<br>* paragraph [0010] - paragraph [0013] *<br>* paragraph [0015] - paragraph [0021] *<br>* paragraph [0024] *<br>* paragraph [0030] *<br>* paragraph [0037] *<br>* paragraph [0039] *<br>* paragraph [0041] *<br>* paragraph [0043] - paragraph [0046] *<br>* paragraph [0049] - paragraph [0050] *<br>* paragraph [0054] - paragraph [0063] *<br>* figures 2, 3 *<br>* tables 1-9 *<br>- - - - - | 1-15 | INV.<br>G06Q10/063<br>G06Q10/0637<br>G06Q10/0639<br>G06Q10/067 |
| A | US 2020/090088 A1 (ARORA PRITPAL [IN] ET AL) 19 March 2020 (2020-03-19)<br>* paragraph [0001] *<br>* paragraph [0003] - paragraph [0005] *<br>* paragraph [0019] - paragraph [0020] *<br>* paragraph [0022] *<br>* paragraph [0025] *<br>* paragraph [0027] - paragraph [0028] *<br>* paragraph [0031] *<br>* paragraph [0033] *<br>* paragraph [0036] - paragraph [0040] *<br>* paragraph [0043] *<br>* paragraph [0045] *<br>* paragraph [0051] - paragraph [0053] *<br>* paragraph [0057] - paragraph [0059] *<br>* paragraph [0063] *<br>* paragraph [0079] - paragraph [0082] *<br>* figures 2, 3, 5 *<br>- - - - -<br>-/-- | 1-15 | TECHNICAL FIELDS SEARCHED (IPC)<br><br>G06Q |

The present search report has been drawn up for all claims

| Place of search | Date of completion of the search | Examiner |
|---|---|---|
| Munich | 20 January 2025 | Bharucha, Zubin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 24 20 2116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/065091 A1 (BHATTACHARYYA ANIRBAN [US] ET AL) 4 March 2021 (2021-03-04)<br>* paragraph [0002] - paragraph [0004] *<br>* paragraph [0275] *<br>* paragraph [0278] - paragraph [0280] *<br>* paragraph [0282] - paragraph [0283] *<br>* paragraph [0285] - paragraph [0286] *<br>* paragraph [0289] *<br>* paragraph [0293] *<br>* paragraph [0295] *<br>* paragraph [0302] *<br>* paragraph [0305] *<br>* paragraph [0307] *<br>* paragraph [0313] - paragraph [0315] *<br>* paragraph [0317] - paragraph [0318] *<br>* paragraph [0321] *<br>* paragraph [0326] - paragraph [0327] *<br>* paragraph [0329] *<br>* figures 1, 4, 29-33, 35, 37 *<br>- - - - - | 1-15 | |

TECHNICAL FIELDS
SEARCHED        (IPC)

The present search report has been drawn up for all claims

| Place of search | Date of completion of the search | Examiner |
|---|---|---|
| Munich | 20 January 2025 | Bharucha, Zubin |

EPO FORM 1503 03.82 (P04C01)

## ANNEX TO THE EUROPEAN SEARCH REPORT
## ON EUROPEAN PATENT APPLICATION NO.

EP 24 20 2116

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2025

| Patent document cited in search report | | Publication date | Patent family member(s) | | Publication date |
|---|---|---|---|---|---|
| US 2013173353 | A1 | 04-07-2013 | EP | 2610789 A1 | 03-07-2013 |
| | | | GB | 2498023 A | 03-07-2013 |
| | | | US | 2013173353 A1 | 04-07-2013 |
| US 2020090088 | A1 | 19-03-2020 | NONE | | |
| US 2021065091 | A1 | 04-03-2021 | US | 2021065091 A1 | 04-03-2021 |
| | | | US | 2023401513 A1 | 14-12-2023 |
| | | | WO | 2021042006 A1 | 04-03-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321066893